# NEUE EUROPÄISCHE PATENTSCHRIFT

(11) **EP 0 508 288 B2**
(45) Veröffentlichungstag und Bekanntmachung des Hinweises auf die Entscheidung über den Einspruch: **02.01.2003**
(45) Hinweis auf die Patenterteilung: 19.03.1997
(21) Anmeldenummer: 92105588.5
(22) Anmeldetag: 01.04.1992
(51) Int. Cl.: G05B 19/04, G05D 23/00, G05D 23/20, A21B 1/40, H05B 1/02

(54) **Haushaltsbackofenregler**
Controller for electric heaters
Dispositif de réglage pour appareils de chauffage électrique

(30) Priorität: 11.04.1991 DE 4111784
(43) Veröffentlichungstag der Anmeldung: 14.10.1992
(73) Patentinhaber: E.G.O. Elektro-Gerätebau GmbH, 75038 Oberderdingen (DE)
(72) Erfinder: Schilling, Wilfried, W-7527 Kraichtal-Mü (DE); Brennenstuhl, Volker, W-7129 zaberfeld (DE); Wilhelm, Paul-Peter, W-7519 Oberderdingen (DE)
(74) Vertreter: Patentanwälte Ruff, Wilhelm, Beier, Dauster & Partner

(56) Entgegenhaltungen:
- DE-A- 2 945 681
- DE-A- 3 031 967
- DE-A- 3 438 920
- DE-A- 3 545 108
- DE-A- 3 702 112
- DE-A- 3 816 761
- DE-A- 3 823 388
- GB-A- 2 219 663
- US-A- 3 975 720
- US-A- 4 504 922

## Beschreibung

Bei Haushaltsbacköfen, insbesondere auch bei ähnlichen Haushaltswärme- und Kochgeräten, sind Temperaturregler vorgesehen, die das Gerät in Abhängigkeit von einer Temperatur an einem möglichst repräsentativen Punkt oder Bereich regeln sollen. Dieser Bereich stimmt aber selten mit der tatsächlichen Anbringungsmöglichkeit für einen Temperaturfühler überein, so daß der Regler Abweichungen in der Absoluttemperatur und der Temperaturcharakteristik berücksichtigen muß. Das bedeutet, daß die Temperaturregler zumindest in ihrer Justage, möglichst aber auch in ihren sonstigen Charakteristika für jeden speziellen Anwendungsfall anders abgestimmt werden müssen.

Aus der DE-A-35 45 108 ist bei einer Herdsteuerschaltung die Speicherung eines Arbeitsablaufes als Programmvorgabe bekannt geworden. Es wird also dort ein Zeit-/Temperaturprofil aufgezeichnet, und zur Wiedergabe bereitgestellt. Dazu wird ein Schreib-Lese-Programmspeicher verwendet.

Aus der DE-A-37 02 112 ist ein Verfahren zur Einstellung eines digitalen Reglers bekannt geworden, bei dem zur Speicherung von digitalen Regelparametern ein Nur-Lese-Speicher vorgesehen ist. Bei dem Verfahren wird zur Einstellung anstelle des Nur-Lese-Speichers ein Schreib-Lese-Speicher angeschlossen. In diesen wird aus einem Personal-Computer ein Programm eingespielt und nach Erprobung der Werte wird das Ergebnis wiederum in einen Nur-Lese-Speicher und dieser dann im betriebsbereiten Gerät verwendet. Es erfolgt also dort zwischen der Einstellung und der Betriebsphase ein Austausch des Speichers.

Aus der DE-A-30 31 967 ist eine Programmsteuerung mit Speicherung bestimmter Temperatur-Zeitdauer-Programme bekannt geworden, durch deren Aufruf eine Ankoch-, Fortkoch- und Schlußkochphase ausgelöst werden kann.

Die GB-A-2 219663 betrifft die Temperaturregelung einer automatischen Brot-Herstellungsmaschine, bei der ein Temperaturfühlersignal zur Auslösung einer Stufenschaltung über einen Vergleicher an unterschiedliche Widerstände angeschlossen wird, die von einem Mikroprozessor mit Ausgangssignalen versorgt werden.

Aufgabe der Erfindung ist es daher, einen Regler zu schaffen, bei dem eine leichte und möglichst genaue Anpassung an unterschiedliche Zuordnungen des Temperaturfühlers zu dem Gerät möglich ist.

Diese Aufgabe wird erfindungsgemäß durch den Anspruch 1 gelöst.

Durch den Speicher, der vorzugsweise gesondert von dem Rechnerbauelement, einem auch Micro-Controller genannten Prozeßrechner, vorgesehen sein kann, ist es möglich, die Parameter in Form von Daten zu speichern, die die im Prozeßrechner vorgesehenen Prozeßdaten ergänzen oder ändern. So können die in diesen Speicher gespeicherten Parameter solche für den Anfangs- und Endwert des Sollwerteinstellbereiches und den Zusammenhang zwischen Sollwert und der tatsächlich zu regelnden Temperatur am Ort des Meßfühlers, z.B. in Form einer Funktion oder Kennlinie enthalten sein. Es ist vor allem auch möglich, dies für mehrere unterschiedliche Betriebszustände oder -bedingungen gesondert einzugeben.

Die Eingabe kann, ohne Eingriff in die im Prozeßrechner fest vorgesehenen Arbeitsprogramme über den Einleseanschluß erfolgen, der zugleich der Anschluß für die normalen Eingabe- bzw. Anzeigeelemente sein kann. Beispielsweise kann die Eingabe über einen normalen Personal-Computer (PC) erfolgen, d.h. einen handelsüblichen Industrie-Standard-Rechner, und zwar entweder durch manuelle Eingabe eines errechneten Wertes, durch automatisches Kopieren vorher ermittelter Werte oder, als besondere Hilfe bei der Ermittlung der Zusatz-Prozeßdaten, über eine an den Personal-Computer angeschlossene Temperaturmeßeinrichtung. Dort ist es beispielsweise möglich, einen Temperaturfühler anzuschließen, der an dem für die Temperaturmessung idealen Punkt, beispielsweise dem Muffelmittel- oder Schwerpunkt des Backofens, angeordnet ist. Der Personal-Computer kann dann die Abhängigkeit der Temperaturfühleranzeige dieses Hilfstemperaturfühlers mit dem des normal installierten vergleichen und die entsprechenden Korrekturdaten sowohl für die absolute Höhe als auch für die Charakteristik, ggf. auch für die Aufheiz- und Abkühl-Charakteristika, ermitteln, so daß diese über den Einleseanschluß dem Speicher eingegeben werden können.

Dies kann, wenn in einer Serie stets gleiche Verhältnisse herrschen, nur an bestimmten Testgeräten vorgenommen werden, und die so ermittelten Werte können dann in den Speicher kopiert werden. Es ist aber wegen der Einfachheit dieser Messung auch möglich, bei der Endkontrolle jedes Gerät mit seinen spezifischen Werten zu versehen. Diese Eingabe könnte dann statt der normalen Justage des Reglers vorgenommen werden. Auch Zwischenlösungen sind denkbar, spielsweise eine stichprobenartige Überprüfung bei der Qualitätskontrolle mit jeweiliger, ggf. automatisch vorgenommener Berücksichtigung (Rückkopplung) bei der weiteren Serienfertigung.

Es ist vor allem auch möglich, verschiedene Betriebsbedingungen innerhalb eines einzelnen Gerätes zu berücksichtigen, die oft unterschiedliche Regelkennlinien erfordern oder hervorrufen, beispielsweise in einem Backofen, bei dem sowohl der normale Ober-/Unterhitzebetrieb, Umluft und Grill umschaltbar vorgesehen sind. Wegen der unterschiedlichen Wärmeübertragungsverhältnisse ändert sich die Anpassung der Ist-Wert-Anzeige des fest installierten Temperaturfühlers gegenüber den tatsächlichen Temperaturverhältnissen im Muffelschwerpunkt dabei ganz erheblich. Es kann also vorgesehen sein, daß für diese unterschiedlichen Betriebsarten des gleichen Gerätes unterschiedliche Datensätze aus dem Speicher abgerufen werden und dem Prozeßrechner zur Anpassung dienen.

Besonders vorteilhaft ist, daß nunmehr der gleiche Regler mit dem gleichen Rechnerbaustein (Prozeßrechner) in einer festen Programmierung für die unterschiedlichsten Geräte verwendet werden kann. Dadurch kann die Typenvielfalt der Regler praktisch auf einen einzigen reduziert werden, während es bisher selbst für gleiche Backöfen und innerhalb dieser für unterschiedliche Typen, z.B. mit unterschiedlicher Muffelisolierung, nötig war, unterschiedliche Regler zu verwenden oder diese besonders und meist mit unvollkommenem Ergebnis anzupassen.

Es ist auch möglich, den Speicher für die Speicherung von Daten unterschiedlicher Programme, beispielsweise für unterschiedliche Backgüter, zu verwenden.

Auch der Anschluß von weiteren Temperaturfühlern, beispielsweise einen wahlweise verwendbaren Kerntemperaturfühler für das Backgut, ist möglich und kann in den Datensätzen Berücksichtigung finden.

Diese und weitere Merkmale gehen außer aus den Ansprüchen auch aus der Beschreibung und den Zeichnungen hervor. Ein Ausführungsbeispiel der Erfindung ist in den Zeichnungen dargestellt und wird im folgenden näher erläutert. In den Zeichnungen zeigen:
- Fig. 1: ein Blockschaltbild mit einem Backofen und einem Temepraturregler und
- Fig. 2: ein Schaubild mit verschiedenen Kennlinienverläufen.

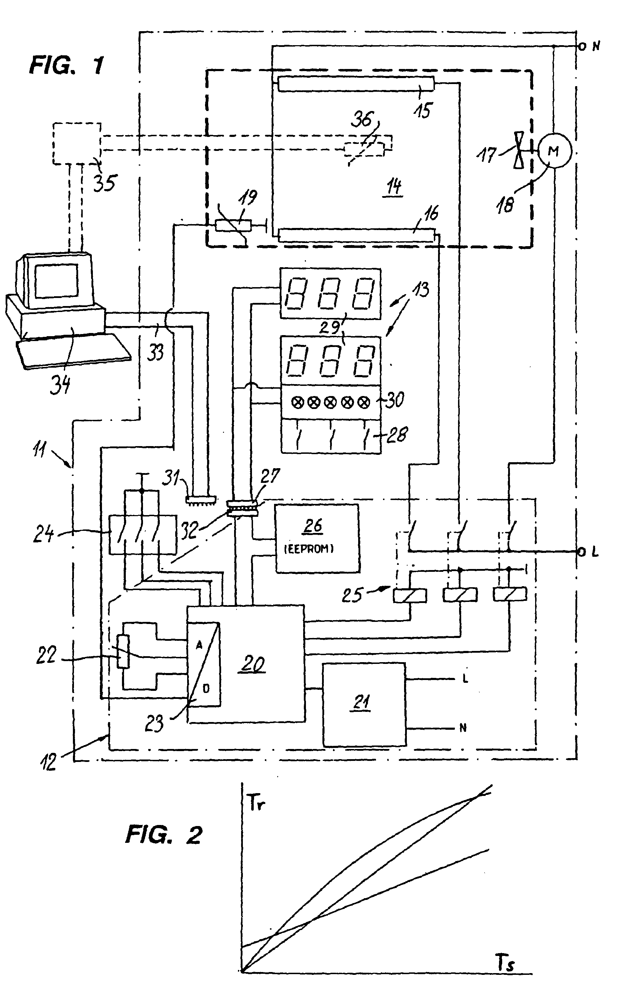

Fig. 1 zeigt schematisch einen Backofen 11 und einen zugehörigen Regler 12 mit Eingabemitteln 13, die meist auch Anzeigefunktionen enthalten. Der Backofen besitzt eine Backofenmuffel 14, in der beim Ausführungsbeispiel zwei elektrische Heizwiderstände, und zwar für eine Oberhitze- und Unterhitze-Beheizung 15, 16 vorgesehen sind. Ferner ist für eine Umluftbeheizung ein Lüfter 17 mit einem zugehörigen Motor 18 vorgesehen. In der Backofenmuffel 14 ist ferner ein Temperaturfühler 19 fest angeordnet, und zwar im Bereich einer der Wandungen, weil der Innenraum der Backofenmuffel für das Gargut frei bleiben muß.

Der Regler 12 ist ein Temperaturregler, dessen Hauptregelelement ein Rechnerbauelement 20 ist, das als Prozeßrechner bzw. Micro-Controller ausgebildet ist. Es wird von einem Netzgerät 21 versorgt, das an das Haushaltsnetz L-N angeschlossen und erhält seine Eingangswerte einerseits von den Temperaturfühlern 19 und einem Sollwertsteller 22 über einen integrierten Analog-Digitalwandler 23 und andererseits von den Eingabemitteln 13 sowie von einem Betriebsartenwähler 24. Die Ausgangssignale des Rechner-Bauelementes steuern die Spulen von Leistungsrelais' 25, die auch durch andere Bauelemente, beispielsweise TRIAC's, gebildet sein können. Beim Ausführungsbeispiel sind drei Leistungsrelais' 25 vorgesehen, die die Netzspannung L-N wahlweise an Oberhitze 15, Unterhitze 16 oder Lüftermotor 18 legen.

Dem Rechnerbauelement 20 ist ferner ein nicht flüchtiger Speicher 26 (EEPROM) zugeordnet. Es handelt sich dabei um einen programmierbaren elektronischen Speicher, der Daten dauerhaft, d.h. auch ohne ständige Spannungsversorgung, speichert. Er ist an die gleiche Datenleitung angeschlossen, die die Anzeige und Eingabemittel 13 mit dem Rechner-Bauelement 20 verbindet, und die als Datenbus ausgebildet ist. Der Regler enthält eine Steckbuchse 32, an die ein entsprechender Anschlußstecker 27 an dem Datenbus zu den Eingabe- und Anzeigemitteln 13 angeschlossen ist. Sie bilden somit einen Einleseanschluß 27, 32. Die Anzeige- und Eingabemittel 13 enthalten beispielsweise Eingabetasten 28 für Temperatur- und Zeitwerte, die auf den Anzeigen 29 angezeigt werden. ferner sind Funktionsanzeigen 30 vorgesehen.

Fig. 1 zeigt ferner, daß über die Anschlußbuchse 32 anstelle der Eingabe- und Anzeigemittel 13 auch ein Stecker 31 angeschlossen werden kann, der an einer Leitung 33 vorgesehen ist, die zu einem Einlesegerät 34, beispielsweise einen üblichen Personal-Computer (PC), führt. Von dem PC 34 können somit Daten in den Speicher 26 eingelesen und dort dauerhaft gespeichert werden.

An das Einlesegerät (PC) 34 kann eine Temperaturmeßeinrichtung 35 angeschlossen werden, die mit einem Temperaturmeßfühler 36 (strichliert dargestellt) verbunden ist. Dieser ist frei beweglich und kann dementsprechend auch in der Backofenmuffel angeordnet werden.

Im folgenden wird das Verfahren zum Einrichten und zum Betrieb des dargestellten Backofens beschrieben:

Ein Backofen mit einem Regler 12, der im Rechnerbaustein 20 fest programmierten Reglerdaten (Anfangs-Endwerte und Kennlinienverlauf) aufweist, wird an das Einlesegerät 34 angeschlossen, indem die Steckbuchse 32 mit dem Stecker 31 verbunden wird. Dann wird der (oder mehrere) Temperaturfühler 36 an eine für die Temperatur der Backofenmuffel 14 möglichst repräsentative Stelle gebracht, beispielsweise im Wärme-Schwerpunkt der Backofenmuffel. Dabei können auch mögliche Belastungen, beispielsweise ein "Muster-Backgut" vorgesehen werden. Der PC 34 behält dadurch Temperaturwerte, die der genauen Ist-Temperatur des Haushaltsbackofens entsprechen. die der Regler einregeln soll. Außerdem erhält er über den Datenbus vom Rechnerbauelement 20 die von dem Standard-Temperaturfühler 19 gleichzeitig ermittelten Temperaturwerte. Durch Vergleich dieser Werte kann also die Differenz zwischen der gewünschten Ist-Temperatur und der später im Betrieb festgestellten Temperatur am Temperaturfühler 19 ermittelt werden. Wenn man diese Messung in verschiedenen repräsentativen Betriebszuständen des Backofens vornimmt, so können im PC 34 durch ein entsprechendes Auswertungsprogramm die Parameter ermittelt werden, die zur Ergänzung bzw. Änderung der Standarddaten, von denen das Rechnerbauelement 20 ausgeht, erforderlich sind, um dem Rechnerbauelement die genauen bzw. für die Reglerfunktion idealen Ist-Werte zu liefern. Im Grunde handelt es sich also um Korrekturwerte, die jedoch je nach Betriebszustand unterschiedlich sein können.

Dazu kann nun diese Anpassung mit jeweiliger Neueingabe entsprechender Datensätze in den Speicher 26 für die unterschiedlichen Betriebsarten des Ofens, die über den Betriebsartenschalter 24 angewählt werden, vorgenommen werden (beispielsweise normal, Umluft und Grillbetrieb etc.).

Nachdem diese Parameter im Speicher 26 abgelegt und dort fest einprogrammiert sind, kann der Stecker 31 wieder gegen den Stecker 27 ausgetauscht werden, so daß nun die Zahleneingabe und Anzeigefelder 28, 29, 30 wieder angeschlossen sind, und der Backofen kann in Betrieb genommen werden. Es wird also beispielsweise eine bestimmte Betriebsart am Betriebsartenschalter 24 eingestellt und eine bestimmte Temperatur und Zeit über die Eingabetasten 28 eingegeben. Der Regler gibt durch entsprechende Ansteuerung der Relais' 25 die jeweiligen Heizungen, den Lüftermotor oder andere Wirkelemente frei. So kann der Temperaturregler beispielsweise zur taktenden Leistungsfreigabe eingerichtet sein, beispielsweise sich an eine bestimmte eingestellte Temperatur mit voller Leistungsfreigabe schnell annähern, dann jedoch bereits mit einem Takten, d.h. mit impulsweiser Leistungsfreigabe weiter annähern und dann wiederum taktend diese Temperatur halten, um möglichst geringe Regelschwankungen zu erreichen.

Dabei wird jeweils entsprechend der eingestellten Betriebsart aus dem Speicher 26 ein entsprechender Datensatz abgerufen, der die Standarddaten des Rechnerbauelementes 20 ergänzt bzw. korrigiert, so daß die jeweilige Temperatureinstellung oder -ansteuerung so geschieht, als wäre der Temperaturfühler 19 nicht aus baulichen und betrieblichen Gründen in irgendeinem Randbereich angeordnet, sondern tatsächlich im für das Backgut entscheidenden wärmemäßigen Schwerpunkt.

Fig. 2 zeigt Beispiele von Kurven, die die in dem Speicher 26 einprogrammierten Datensätze darstellen. Es ist dort die Regeltemperatur Tr über der Solltemperatur Ts aufgetragen, und es ist zu sehen, daß diese Kurvengeraden mit einem Ausgangspunkt im Nullpunkt, mit entsprechendem Nullpunkisversatz oder auch entsprechend gekrümmte Kurven sein können, die durch entsprechende Datengruppen oder auch durch Beschreibung mittels einer mathematischen Funktion in dem Speicher 26 festgehalten sein können.

Wie bereits beschrieben, kann theoretisch jeder Backofen auf diese Weise individuell korrigiert werden. Diese Korrektur würde dann eine Justage des Temperaturreglers, beispielsweise mittels des Sollwertstellers 22 ersetzen. Es ist aber auch möglich, in der Serie nur Geräte stichprobenartig durch Neuermittlung der im Speicher 26 gespeicherten Daten abzugleichen und im übrigen den Speicher 26 über ein beliebiges Einlesegerät mit den entsprechenden Daten 26 zu versorgen, d. h. diese Daten (Variablen) hineinzukopieren. Es ist auch möglich, die Daten auf andere Weise einzugeben als über den für die üblichen Anzeige- und Eingabemittel 13 vorgesehenen Anschluß 32, jedoch ist diese Ausführung besonders sinnvoll. Auch die rein bauliche Einbeziehung des Speichers 26 in das Rechnerbauelement wäre möglich.

## Patentansprüche

1. Haushaltsbackofenregler
mit wenigstens einem dem Haushaltsbackofen zugeordneten Temperaturfühler (19), einem elektronischen Rechnerbauelement (20) und Eingabemitteln (13) für dieses, mit einem nicht flüchtigen Schreib-Lese-Speicher (EEPROM 26) für Parameter von Auswertungsfunktionen von Temperaturfühlerdaten, die ihm beim Einrichten des Haushaltsbackofens über einen Einleseanschluß (32) eingegeben und in ihm gespeichert werden, wobei beim Betrieb des Haushaltsbackofens
die Parameter aus dem Speicher (26) dem Rechnerbauelement (20) zur Auswertung der Temperaturfühler-Meßdaten zuführbar sind.

2. Regler nach Anspruch 1, **dadurch gekennzeichnet, daß** der Speicher (26) von dem Rechnerbauelement (20) (Micro-Controller) gesondert ist.

3. Regler nach Anspruch 1 oder 2, **dadurch gekennzeichnet, daß** der Speicher (26) zur Speicherung von Kennliniendaten, wie Anfangs- und Endwerten, wenigstens eines Sollwerteinstellbereiches und Kurvenparametern von zugehörigen Temperaturkurven ausgebildet ist.

4. Regler nach einem der vorhergehenden Ansprüche, **dadurch gekennzeichnet, daß** der Speicher (26) für die Speicherung zu unterschiedlichen Zusatz-Prozeßdatengruppen für unterschiedliche Betriebsarten des Haushaltsbackofens (11) ausgebildet ist.

5. Regler nach einem der vorhergehenden Ansprüche, **dadurch gekennzeichnet, daß** der Einleseanschluß (32) gleichzeitig Anschluß für die Eingabemittel (13) ist.

6. Regler nach einem der vorhergehenden Ansprüche, **dadurch gekennzeichnet, daß** ein an den Einleseanschluß (32) angeschlossenes Einlesegerät (34), z.B. ein Personal-Computer (PC) (34) mit einer Temperaturmeßeinrichtung (35) verbunden ist, die Ist-Temperaturen im Haushaltsbackofen (11) unter anderen Bedingungen aufnimmt als der wenigstens eine Temperaturfühler (19) und daß das Einlesegerät (34) zur Umwandlung der Abhängigkeit zwischen den Temperaturwerten des Temperaturfühlers (19) und der Temperaturmeßeinrichtung (36) in Zusatz-Prozeßdaten ausgebildet ist.

## Claims

1. Controller for household baking ovens having at least one temperature sensor (19) associated with the household baking oven, an electronic computer component (20) and input means (13) for the latter, having a non-volatile random-access memory (EEPROM 26) for parameters of evaluation functions of temperature sensor data, which are inputted into it on setting up the household baking oven by means of a read-in connection (32) and are stored therein, in which during the operation of the household baking oven the parameters can be supplied from the memory (26) to the computer component (20) for evaluating the temperature sensor data.

2. Controller according to claim 1, **characterized in that** the memory (26) is separate from the computer component (20) (microcontroller).

3. Controller according to claim 1 or 2, **characterized in that** the memory (26) is constructed for storing characteristic data, such as starting and final values, at least one set-point adjustment range and curve parameters of associated temperature curves.

4. Controller according to one of the preceding claims, **characterized in that** the memory (26) is constructed for the storage with respect to different additional process data groups for different operating modes of the household baking oven (11).

5. Controller according to one of the preceding claims, **characterized in that** the read-in connection (32) is simultaneously the connection for the input means (13).

6. Controller according to one of the preceding claims, **characterized in that** a read-in device (34), e.g. a personal computer (PC) (34) connected to the read-in connection (32) is connected to a temperature measuring device (35), which records the actual temperatures in the household baking oven (11) under

## Revendications

1. Dispositif de réglage pour four ménager de cuisson, avec au moins un palpeur de température (19) associé au four ménager de cuisson, un module de calcul électronique (20) et des moyens d'entrée (13) pour ce dernier, et avec une mémoire à lecture et écriture non volatile (EEPROM, 26) pour des paramètres de fonctions d'interprétation de données du palpeur de température, qui sont introduits dans cette mémoire par l'intermédiaire d'une connexion d'entrée en mémoire (32) lors de l'ajustement du four ménager de cuisson et qui sont mémorisés dans cette mémoire, les paramètres pouvant, lors de l'exploitation du four ménager de cuisson, être apportés de la mémoire (26) au module de calcul (20) pour interpréter les données de mesure du palpeur de température.

2. Dispositif de réglage selon la revendication 1, **caractérisé en ce que** la mémoire (26) est séparée du module de calcul (20) (microprocesseur).

3. Dispositif de réglage selon la revendication 1 ou 2, **caractérisé en ce que** la mémoire (26) est conçue pour mémoriser des données de courbe caractéristique, telles que des valeurs initiales et des valeurs finales, d'au moins une plage de réglage de valeur de consigne, et des paramètres de courbes associées de température.

4. Dispositif de réglage selon l'une des revendications précédentes, **caractérisé en ce que** la mémoire (26) est conçue pour mémoriser différents groupes de données auxiliaires de processus pour différents modes d'exploitation du four ménager de cuisson (11).

5. Dispositif de réglage selon l'une des revendications précédentes, **caractérisé en ce que** la connexion d'entrée en mémoire (32) est en même temps une connexion pour les moyens d'entrée (13).

6. Dispositif de réglage selon l'une des revendications précédentes, **caractérisé en ce qu'**un appareil d'entrée en mémoire (34) raccordé à la connexion d'entrée en mémoire (32), par exemple un ordinateur personnel (PC, 34), est relié à un dispositif de mesure de température (35) qui enregistre des températures réelles dans le four ménager de cuisson (11) dans d'autres conditions que le ou les palpeurs de température (19), et **en ce que** l'appareil d'entrée en mémoire (34) est conçu pour transformer en données auxiliaires de processus la relation entre les valeurs de température du palpeur de température (19) et du dispositif de mesure de température (36).
